# EUROPÄISCHE PATENTSCHRIFT

(11) **EP 2 193 406 B1**
(45) Veröffentlichungstag und Bekanntmachung des Hinweises auf die Patenterteilung: **20.07.2011**
(21) Anmeldenummer: 08803303.0
(22) Anmeldetag: 28.08.2008
(51) Int. Cl.: G05B 19/042

(54) **VERFAHREN ZUR ZUGRIFFSKONTROLLE AUF EINE AUTOMATISIERUNGSANLAGE**
METHOD FOR THE ACCESS CONTROL TO AN AUTOMATION UNIT
PROCÉDÉ DE CONTRÔLE DE L'ACCÈS À UNE INSTALLATION D'AUTOMATISATION

(30) Priorität: 25.09.2007 DE 102007045772
(43) Veröffentlichungstag der Anmeldung: 09.06.2010
(73) Patentinhaber: Siemens Aktiengesellschaft, 80333 München (DE)
(72) Erfinder: FALK, Rainer, 85435 Erding (DE); KOHLMAYER, Florian, 82319 Starnberg (DE); KÖPF, Andreas, 81739 München (DE)
(86) Internationale Anmeldenummer: PCT/EP2008/061277
(87) Internationale Veröffentlichungsnummer: WO 2009/040206

(56) Entgegenhaltungen:
- EP-A- 1 621 944
- COVINGTON M J ET AL: "SECURING CONTEXT-AWARE APPLICATIONS USING ENVIRONMENT ROLES" PROCEEDINGS OF THE 6TH. ACM SYMPOSIUM ON ACCESS CONTROL MODELS AND TECHNOLOGIES. SACMAT 2001. ( FORMERLY ACM WORKSHOPS ON ROLE-BASED ACCE SS CONTROL ). CHANTILLY, VA, MAY 3-4, 2001; [ACM SYMPOSIUM ON ACCESS CONTROL MODELS AND TECHNOLOGIES. (FORMERLY, 3. Mai 2001 (2001-05-03), Seiten 10-20, XP001054982 ISBN: 978-1-58113-350-9 in der Anmeldung erwähnt

## Beschreibung

Mit Einzug der Informationstechnik (IT) in die Automatisierung und der zunehmenden Integration mit Büroumgebungen steigt auch der Bedarf an Sicherheitslösungen für Automatisierungsumgebungen. Zugriffskontrolle ist dabei eine wesentliche Sicherheitsfunktionalität, durch die festgelegt und durchgesetzt wird, wer welche Handlungen durchführen kann. So kann beispielsweise festgelegt werden, welche Zugriffe durch Bedienpersonal zum Bedienen und Beobachten eines Verfahrens oder einer Fertigung oder eines Verfahrens- oder FertigungsProzesses erfolgen können.

Drei Hauptsäulen der IT-Sicherheit sind Vertraulichkeit, Integrität und Verfügbarkeit. Bezogen auf typische Büroumgebungen spielt meist Vertraulichkeit und Integrität der Daten die höchste Rolle. Im Automatisierungsumfeld ist meist jedoch die Verfügbarkeit wichtiger als die Vertraulichkeit der Daten. Üblicherweise werden hierbei kaum hochgeheime Daten, sondern hauptsächlich Steuer- und Statusbefehle über das Netzwerk übertragen.

Aufgrund der Einsatzumgebung müssen dort spezielle Randbedingungen berücksichtigt werden. So darf beispielsweise in einer verfahrenstechnischen Automatisierungsumgebung ein Herstellungsprozess/ der Prozessindustrie ein physikalischer Prozess, wie beispielsweise das Erwärmen und Rühren eines Klebstoffes, bei einem Sicherheits-Notfall in der Anlagensteuerung nicht einfach angehalten werden. Ebenso darf umgekehrt in einem Notfall, beispielsweise bei einer Überhitzung des Klebstoffs, durch IT-Sicherheitsmaßnahmen ein Eingreifen durch Bedienpersonal nicht verhindert werden. Eng gesetzte Zugriffsrechte, wie dies aus Sicht der IT-Sicherheit wünschenswert ist, dürfen nicht dazu führen, dass in einem solchen Notfall erforderliche manuelle Eingriffe unterbunden oder unnötig erschwert werden.

Bekannt ist eine Rollenbasierte Zugriffskontrolle (RBAC; Role Based Access Control). In der Praxis wird darunter oft lediglich eine rollenbasierte Administration von Zugriffsrechten verstanden. Dabei werden Gruppen definiert entsprechend den anfallenden Aufgaben. Zugriffsrechte werden einzelnen Gruppen zugewiesen. Einzelne Mitarbeiter werden den ihren Aufgaben entsprechenden Gruppen zugeordnet und erhalten so die für ihre Aufgabe erforderlichen Zugriffsrechte.

Vom theoretischen Gesichtspunkt aus betrachtet bedeutet RBAC, dass ein einzelner Mitarbeiter zu unterschiedlichen Zeitpunkten unterschiedliche Aufgaben wahrnimmt, entsprechend zu unterschiedlichen Zeitpunkten unterschiedliche Rollen wahrnimmt. Ändern sich zwischen mehreren Zeitpunkten die Aufgaben des Mitarbeiters, führt er dazu jeweils einen Rollenwechsel durch, um der jeweils aktuell wahrgenommenen Rolle zugeordnete Zugriffsrechte zu erhalten.

Aus EP1621944 A2 ist ein Verfahren zur Zugriffskontrolle auf eine Automatisierungsanlage bekannt, bei dem durch die Zugriffskontrolle vorgegebene Zugriffsrechte vom Betriebszustand der Automatisierungsanlage abhängen.

Durch Covington et Al "Securing Context-Aware Applications Using Environment Roles", Proceedings of the sixth ACM symposium on Access control models and technologies, Chantilly, Virginia, United States, pp 10 - 20, 2001, ISBN:1-58113-350-2 ist außerdem eine Kontext-basierte Zugriffskontrolle in der Pflege und Überwachung älterer Menschen zu Hause bekannt, bei der Zugriffsrechte von einer auch als Umgebungsinformation bezeichneten Kontext-Information abhängig sind. Diese Kontext- oder auch Zusammenhang-Information betrifft die Tageszeit, den Wochentag, den Aufenthaltsort oder den aktuellen Status eines Arbeitsablaufs. Die Zugriffsrechte sind bestimmten Umgebungs-Rollen zugeordnet. Unterschiedliche Umgebungs-Rollen können durch Kontext-Informationen ausgelöst werden. Eine Aktivierung einer Umgebungs-Rolle kann eine Aktion automatisch auslösen. So wird beispielsweise bei einer Aktivierung der Umgebungs-Rolle "verletzt" automatisch ein Notruf aufgebaut.

Als eine Aufgabe der Erfindung kann es angesehen werden, eine besser an eine Automatisierungsumgebung angepasste Zugriffskontrolle bereit zu stellen.

Die Aufgabe wird erfindungsgemäß gelöst durch die Merkmale des Anspruchs 1.

Ein erfindungsgemäßes Verfahren zur Zugriffskontrolle auf eine Automatisierungsanlage sieht vor, dass durch die Zugriffskontrolle vorgegebene Zugriffsrechte vom Betriebszustand der Automatisierungsanlage abhängen, wobei zumindest in einem Notfall unabhängig von den Zugriffsrechten im Normalbetrieb erweiterte Zugriffsrechte, als im Normalbetrieb gewährt werden.

Indem zumindest in Notfällen ein Notfall-Zugriff mit erweiterten Zugriffsrechten gewährt wird, wird ein schnelles und flexibles Handeln ermöglicht, das nicht durch IT-Sicherheitsmaßnahmen behindert oder unnötig erschwert wird.

Vorteile der Erfindung gegenüber dem Stand der Technik ergeben sich insbesondere daraus, dass für den regulären, operativen Betrieb der Automatisierungsanlage Zugriffsrechte nach den Erfordernissen des regulären Betriebs restriktiv gesetzt werden können. Für besondere Betriebszustände, insbesondere in einem Notfall, werden entsprechend erweiterte Zugriffsrechte gewährt.

Es werden im Prinzip Rollen definiert, die den unterschiedlichen Betriebszuständen einer Automatisierungsanlage entsprechen. Es erfolgt nicht wahlfrei ein Rollenwechsel wie bei RBAC, sondern die Zugriffsrechte hängen vom Betriebszustand ab. Im Normalbetrieb wird ein hohes Maß an Sicherheit erreicht und Zugriffsrechte können restriktiv gesetzt werden, da nur in einem besonderen Betriebszustand, wie beispielsweise bei Wartungsarbeiten oder in einem Notfall, dann benötigte, erweiterte Zugriffsrechte gewährt werden. Dies kann auch als eine Art Override-Funktionalität betrachtet werden, bei der unter bestimmten Umständen die Kontrolle der Zugriffsrechte außer Kraft gesetzt werden kann.

Weiterhin wird die Verwaltung der Zugriffsrechte vereinfacht, da nur die Zugriffsrechte für den Normalbetrieb exakt und eng festgelegt werden müssen. In besonderen Sondersituationen werden erweiterte Zugriffsrechte gewährt unter der Annahme, dass qualifiziertes und vertrauenswürdiges Bedien- und Wartungspersonal unter solchen Umständen Zugriffsrechte nicht missbraucht. Dieses Vertrauen ist darauf begründet, dass ohnehin eine hohe Verantwortung gegenüber dem Bedien- und Wartungspersonal besteht, da es Wartungsaufgaben, wie beispielsweise Werkzeugwechsel oder Kalibrierung oder ein kontrolliertes Herunterfahren eines Verfahrensprozesses vornehmen muss, die nicht oder nicht vollständig automatisiert sind.

Eine vorteilhafte Ausgestaltung der Erfindung sieht vor, dass zur Erfassung des Betriebszustands die Automatisierungsanlage überwacht wird. Die Überwachung kann mittels geeigneter Sensoren automatisch erfolgen oder durch Bedien- und Wartungspersonal durchgeführt werden.

Vorzugsweise wird ein Notfall automatisch ausgelöst, sobald bestimmte Prozessgrößen der Automatisierungsanlage vorgegebene Grenzwerte überschreiten. Ebenfalls ist denkbar, dass ein Notfall durch das Bedien- und Überwachungspersonal manuell ausgelöst wird.

Eine vorteilhafte Ausgestaltung der Erfindung sieht vor, dass die Zugriffsrechte im Normalbetrieb eng festgelegt sind, um Fehlbedienungen und unauthorisierte Zugriffe zu vermieden.

Eine andere vorteilhafte Ausgestaltung der Erfindung sieht vor, dass die Zugriffsrechte im Normalbetrieb rollenbasiert festgelegt sind.

Eine weitere vorteilhafte Ausgestaltung der Erfindung sieht vor, dass im Normalbetrieb zur Erlangung von Zugriffsrechten und/oder zur Erlangung zusätzlicher und/oder anderer Zugriffsrechte eine Identifikation des Zugreifenden bzw. eine Authentisierung beispielsweise durch eine Log-In Prozedur durchgeführt wird. Die Log-In Prozedur kann beliebig ausgestaltet sein, beispielsweise durch Eingabe von Username und/oder Passwort, durch ein Authentisierungstoken, wie etwa mittels einer Chipkarte oder drahtlos, oder durch einen Fingerabdruck oder eine sonstige biometrische Identifikation.

Eine zusätzliche vorteilhafte Ausgestaltung der Erfindung sieht vor, dass bei Auftreten eines Notfalls ein Alarm ausgelöst wird zur automatischen Alarmierung und Aktivierung von Notfallmaßnahmen, beispielsweise damit Einsatzkräfte den Notfall bestätigen können.

Eine besonders vorteilhafte Ausgestaltung der Erfindung sieht vor, dass zumindest während eines Notfalls bzw. in einem Betriebszustand, bei dem erweiterte Zugriffsrechte gewährt sind, die von einem Bedien- und Wartungspersonal vorgenommenen Aktionen und Zugriffe beispielsweise von einer Videokamera aufgezeichnet und/oder beispielsweise auf einem Logging-Server protokolliert werden. Zugriffsrechte können so bei Bedarf, gewissermaßen auf Wunsch überschritten werden. Dies wird aber sowohl durch das Aufzeichnen und Protokollieren der vorgenommenen Zugriffe, als auch durch die Aktivierung einer Video-Überwachung festgehalten und es kann so nachgeprüft werden, ob dies tatsächlich aus berechtigtem Anlass geschah.

Eine vorteilhafte Ausgestaltung der Erfindung sieht vor, dass zumindest in einem Notfall ein spezieller Notfall-Sicherheitsmodus vorgesehen ist, bei dem die für den Normalbetrieb vorgesehene harte bzw. enge Kontrolle und Vergabe von Zugriffsrechten durch weichere Maßnahmen ersetzt wird, die jedoch nachträglich auswertbar sind bzw. ausgewertet werden. Das Ersetzen von im normalen Betrieb gültigen harten Sicherheitsmaßnahmen durch weiche Sicherheitsmaßnahmen in einem Notfall ermöglicht, dass alle erforderlichen Maßnahmen vom Bedien- und Überwachungspersonal durchgeführt werden können. Ein Missbrauch wird dennoch verhindert, da die Tatsache der Notfall-Auslösung sowie die vorgenommenen Aktionen und die erfolgten Zugriffe nachträglich nachvollziehbar sind.

Vorzugsweise umfassen die weicheren Maßnahmen ein Gewähren erweiterter Zugriffsrechte und/oder gegebenenfalls ein Deaktivieren der Kontrolle und Vergabe von Zugriffsrechten, wodurch alle Handlungen und Zugriffe erlaubt werden.

Alternativ ist denkbar, dass die weicheren Maßnahmen einen Verzicht auf eine Authentisierung, beispielsweise durch Log-In, umfassen, wodurch Jedermann eine die Automatisierungsanlage steuernde Bedien- und Überwachungseinrichtung nutzen kann.

Zur nachträglichen Auswertung der weicheren Maßnahmen erfolgt vorzugsweise ein Aufzeichnen und Protokollieren der vorgenommenen Zugriffe. Dies kann auf der Bedien- und Überwachungseinrichtung selbst oder auf einem eigens hierfür vorgesehenen, beispielsweise in einem notfallfesten, beispielsweise feuersicheren und/oder explosionssicheren Raum untergebrachten Logging-Server geschehen.

Zur nachträglichen Auswertung der weicheren Maßnahmen kann beispielsweise eine Aktivierung einer Video-Überwachung bzw. Aktivieren einer Video-Aufzeichnung erfolgen, um so anhand des aufgezeichneten Video-Materials festzustellen, wer den Notfall-Sicherheitsmodus ausgelöst hat und wer welche Zugriffe bzw. Aktionen durchgeführt hat.

Vorzugsweise umfasst der Notfall-Sicherheitsmodus mehrere Unterstufen mit unterschiedlichen Zugriffsrechten, welche schrittweise aktivierbar sind bzw. aktiviert werden. Da eventuell schon minimal höhere Zugriffsrechte ausreichen, um quasi als erste Hilfe das Schlimmste in einem Notfall abwehren zu können, umfasst der Notfall-Sicherheitsmodus vorzugsweise mehrere Unterstufen. Diese lassen sich schrittweise aktivieren. In einer ersten Notfall-Aktivierungsstufe können beispielsweise nur die allernötigsten Rechte gewährt werden, um beispielsweise einen bevorstehenden Notfall hinauszuzögern und einfache Gegenmaßnahmen einzuleiten. Falls weitergehende Maßnahmen notwendig sind, um den Notfall zu verhindern, so muss dann auch noch eine zweite Notfall-Aktivierungsstufe aktiviert werden, die noch weitergehenden, beispielsweise uneingeschränkten Zugriff gewährt. Beispielsweise ist denkbar, dass dabei auch dauerhafte Konfigurationsänderungen vorgenommen werden können. Die Aktivierung einer solchen zweiten Notfall-Aktivierungsstufe kann dann aufwändiger geschützt sein, als die der ersten Notfall-Aktivierungsstufe. So ist beispielsweise denkbar, dass die erste Notfall-Aktivierungsstufe per Mausklick an der Benutzeroberfläche der Bedien- und Überwachungseinrichtung, und die zweite Notfall-Aktivierungsstufe nur über einen physikalischen Sicherheitsschalter, der beispielsweise erst nach Einschlagen einer Schutzscheibe betätigbar ist, aktiviert werden kann.

Eine Aktivierung des Notfall-Sicherheitsmodus kann manuell erfolgen, beispielsweise durch eine Betätigung einer speziellen Schaltfläche auf einer graphischen Bedienoberfläche. Damit eine Aktivierung des Notfall-Sicherheitsmodus aus Bequemlichkeit im regulären operativen Betrieb unterbleibt, ist hierbei eine speziellen Schaltfläche auf einer graphischen Bedienoberfläche vorgesehen, durch deren Betätigung ein manueller Wechsel in den Notfall-Sicherheitsmodus erfolgt. Dabei kann der manuelle Wechsel in den Notfall-Sicherheitsmodus für alle Mitarbeiter zugänglich sein, oder nur für bestimmte authentisierte Mitarbeiter, beispielsweise nur für den oder die Vorarbeiter.

Alternativ kann eine manuelle Aktivierung des Notfall-Sicherheitsmodus durch eine Betätigung eines physikalischen Sicherheitsschalters erfolgen. Bei einem solchen physikalischen Sicherheitsschalter kann es sich beispielsweise um einen Schlüsselschalter handeln, oder um einen Taster mit Einschlagscheibe, wie er beispielsweise von Feuermeldern bekannt ist, oder um zwei räumlich entfernte Schalter, welche von mindestens zwei Personen vorzugsweise gleichzeitig betätigt werden müssen. Bei letzterem können beide Schalter an der Automatisierungsanlage angebracht sein, aber in einem solchen Abstand, dass sie nicht von einer Person alleine gleichzeitig betätigt werden können. Die beiden Schalter können auch derart räumlich voneinander getrennt angeordnet sein, dass ein Schalter beispielsweise an der Automatisierungsanlage selbst angebracht ist und der zweite Schalter in einer entfernten Sicherheitszentrale.

Der physikalische Schalter kann mit einem Feuer- oder Alarmknopf gekoppelt sein, wodurch bei einer Betätigung zusätzlich eine Alarmierung erfolgt, beispielsweise einer Werksfeuerwehr.

Weiterhin ist denkbar, dass eine manuelle Aktivierung des Notfall-Sicherheitsmodus durch eine spezielle Log-In Prozedur erfolgt, beispielsweise eine Eingabe eines speziellen Notfall-Passworts oder eine Nutzung eines speziellen Notfall-Authentisierungstokens, wie etwa eine Notfall-Chipkarte.

Eine Aktivierung des Notfall-Sicherheitsmodus erfolgt vorzugsweise automatisch abhängig vom Betriebszustand der Automatisierungsanlage. Hierzu werden bestimmte Parameter der Automatisierungsanlage überwacht und beispielsweise durch Vergleich mit vorgegebenen Grenzwerten für diese Parameter automatisch entschieden, ob ein normaler Betriebszustand, oder ein Notfall vorliegt. In Verfahrenstechnischen Automatisierungsanlagen können beispielsweise Druck und Temperatur durch geeignete, vorzugsweise redundant angeordnete Sensoren gemessen werden, wobei durch Vergleich mit festgelegten Grenzwerten, wie etwa einer maximal zulässigen Höchsttemperatur, einem maximal zulässigen Höchstdruck, einer Mindesttemperatur, einem Mindestdruck automatisch überwacht und festgestellt werden kann, ob die Messwerte für Druck und Temperatur in der Automatisierungsanlage bei der Durchführung eines bestimmten Verfahrensprozesses innerhalb einem bestimmten, zulässigen Betriebsbereich liegen, also ein normaler Betriebszustand vorliegt, oder nicht, also ein Notfall vorliegt. Alternativ kann auch die Motordrehzahl überwacht und mit festgelegten Sollwerten verglichen werden.

Der Notfall-Sicherheitsmodus kann nach der Aktivierung bestehen bleiben, bis er manuell wieder deaktiviert wird, beispielsweise durch Betätigen eines Schalters oder dergleichen.

Alternativ ist denkbar, dass der Notfall-Sicherheitsmodus nach der Aktivierung nach einer bestimmten vorgegebenen Zeitspanne automatisch wieder deaktiviert wird.

Ebenso kann der Notfall-Sicherheitsmodus nach der Aktivierung nach Abwenden eines Notfalls automatisch deaktiviert werden, beispielsweise wenn die von Sensoren erfassten Messwerte wieder innerhalb eines zulässigen Betriebsbereichs liegen.

Weiterhin ist denkbar, dass der Notfall-Sicherheitsmodus nur so lange aktiviert bleibt, wie ein entsprechender Aktivierungsschalter oder dergleichen betätigt bzw. betätigt gehalten wird.

Die Erfindung wird nachfolgend anhand eines in der Zeichnung dargestellten Ausführungsbeispiels näher erläutert. Es zeigt:

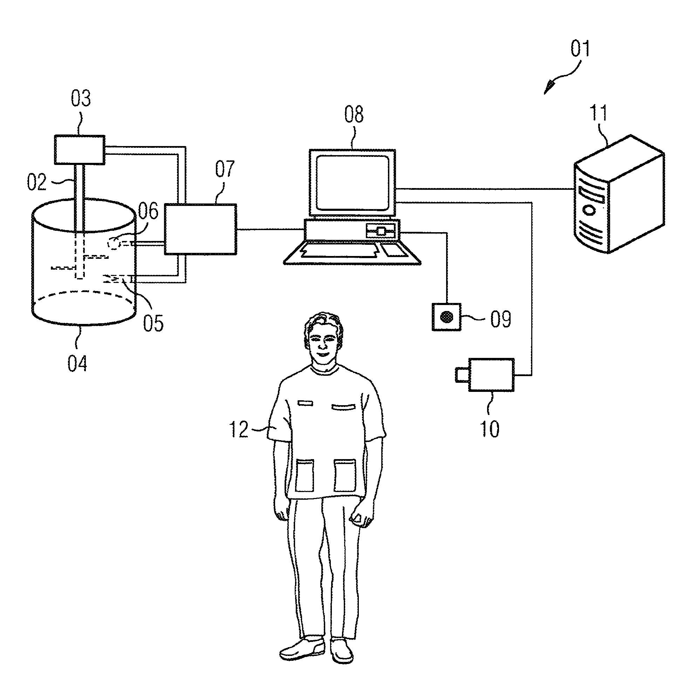

- Fig. 1: eine schematische Darstellung einer Automatisie- rungsanlage.

Eine in Fig. 1 dargestellte Automatisierungsanlage 01 umfasst einen Rührer 02 der von einem Motor 03 angetrieben ist. Der Rührer 02 rührt eine Substanz in einem Behälter 04. Im Behälter 04 befindet sich eine Heizung 05 und ein Temperaturfühler 06, die beide mit einem Prozessrechner 07 verbunden sind. Rohrleitungen zum Stofftransport der Substanz in den und aus dem Behälter 04 sind nicht dargestellt. Der Prozessrechner 07 ist an eine Bedien- und Überwachungseinrichtung 08 angeschlossen. Die Bedien- und Überwachungseinrichtung 08 ist mit einem Notfall-Schalter 09, einer Videokamera 10, sowie einem Logging-Server 11 verbunden. Das Bedien- und Wartungspersonal 12 überwacht und steuert den Verfahrensprozess des Umrührens der Substanz im Behälter 04 über die Bedien- und Überwachungseinrichtung 08. Im Falle eines Zwischen- oder Notfalls betätigt das Bedien- und Wartungspersonal 12 den Notfall-Schalter 09, worauf das Bedien- und Wartungspersonal 12 uneingeschränkte Zugriffsrechte und damit uneingeschränkten Zugriff erhält. Gleichzeitig werden jedoch die vom Bedien- und Wartungspersonal 12 vorgenommenen Aktionen und Zugriffe von der Videokamera 10 aufgezeichnet und auf dem Logging-Server 11 protokolliert.

Erfindungsgemäß wird für den regulären Betrieb einer Automatisierungsanlage mit einer Bedien- und Überwachungseinrichtung eine enge Zugriffskontrolle durchgeführt, bei der sich das Bedienpersonal authentisieren muss, beispielsweise durch einen Log-In, und nur Zugriffe auf die Bedien- und Überwachungseinrichtung vornehmen kann, die außerdem anhand einer definierten Zugriffskontrollpolitik erlaubt sind. Ziel ist dabei weniger, eine hohe Vertraulichkeit der übertragenen Automatisierungsdaten zu erreichen, sondern vielmehr Fehlbedienungen und unauthorisierte Zugriffe zu vermeiden. Die Log-In Prozedur kann beliebig ausgestaltet sein, beispielsweise durch Eingabe von Username und/oder Passwort, durch ein Authentisierungstoken, wie etwa mittels einer Chipkarte oder drahtlos, oder durch einen Fingerabdruck oder eine sonstige biometrische Identifikation.

Um in Notfällen, die naturgemäß unvorhersehbare Aspekte enthalten können, geeignet reagieren zu können, sind dort erweiterte Zugriffsrechte notwendig. Erfindungsgemäß werden in Notfällen erweiterte Zugriffsrechte gewährt. Es wird so ein schnelles und flexibles Handeln ermöglicht, das nicht durch IT-Sicherheitsmaßnahmen behindert oder unnötig erschwert wird.

Hierzu ist ein spezieller Notfall-Sicherheitsmodus / eine spezielle Notfall-Sicherheitskonfiguration vorgesehen.

Dabei wird die für den Normalbetrieb bzw. regulären Betrieb vorgesehene Zugriffskontrolle ersetzt durch weichere Maßnahmen, die jedoch nachträglich auswertbar sind:
- Gewähren erweiterter Zugriffsrechte und/oder gegebenenfalls Deaktivieren der Zugriffskontrolle, wodurch alle Zugriffe erlaubt werden.
- Verzicht auf Authentisierung beispielsweise durch Log-In, wodurch jeder die Bedien- und Überwachungseinrichtung nutzen kann.
- Aufzeichnen und Protokollieren der vorgenommenen Zugriffe, so genanntes Logging. Dies kann auf der Bedien- und Überwachungseinrichtung selbst oder auf einem eigens hierfür vorgesehenen, beispielsweise in einem notfallfesten, beispielsweise feuersicheren und/oder explosionssicheren Raum untergebrachten Logging-Server durchgeführt werden.
- Aktivierung einer Video-Überwachung bzw. Aktivieren einer Video-Aufzeichnung, um so anhand des aufgezeichneten Video-Materials festzustellen, wer den Notfall-Sicherheitsmodus ausgelöst hat und wer welche Zugriffe bzw. Aktionen durchgeführt hat.
- Auslösung eines Alarms, damit Einsatzkräfte den Notfall bestätigen können.

Das Ersetzen von im normalen Betrieb gültigen harten Sicherheitsmaßnahmen durch weiche Sicherheitsmaßnahmen in einem Notfall ermöglicht, dass alle erforderlichen Maßnahmen vom Bedien- und Überwachungspersonal durchgeführt werden können. Ein Missbrauch wird dennoch verhindert, da die Tatsache der Notfall-Auslösung sowie die vorgenommenen Aktionen und die erfolgten Zugriffe nachträglich nachvollziehbar sind.

Zugriffsrechte können so bei Bedarf, gewissermaßen auf Wunsch überschritten werden. Dies wird aber sowohl durch das Aufzeichnen und Protokollieren der vorgenommenen Zugriffe, als auch durch die Aktivierung einer Video-Überwachung festgehalten und es kann so nachgeprüft werden, ob dies tatsächlich aus berechtigtem Anlass geschah.

Da eventuell schon minimal höhere Zugriffsrechte ausreichen, um quasi als erste Hilfe das Schlimmste in einem Notfall abwehren zu können, kann der Notfall-Sicherheitsmodus mehrere Unterstufen umfassen. Diese lassen sich schrittweise aktivieren. In einer ersten Notfall-Aktivierungsstufe können beispielsweise nur die allernötigsten Rechte gewährt werden, um beispielsweise einen bevorstehenden Notfall hinauszuzögern und einfache Gegenmaßnahmen einzuleiten. Falls weitergehende Maßnahmen notwendig sind, um den Notfall zu verhindern, so muss dann auch noch eine zweite Notfall-Aktivierungsstufe aktiviert werden, die noch weitergehenden, beispielsweise uneingeschränkten Zugriff gewährt. Beispielsweise ist denkbar, dass dabei auch dauerhafte Konfigurationsänderungen vorgenommen werden-können. Die Aktivierung einer solchen zweiten Notfall-Aktivierungsstufe kann dann aufwändiger geschützt sein, als die der ersten Notfall-Aktivierungsstufe. So ist beispielsweise denkbar, dass die erste Notfall-Aktivierungsstufe per Mausklick an der Benutzeroberfläche der Bedien- und Überwachungseinrichtung, und die zweite Notfall-Aktivierungsstufe nur über einen physikalischen Sicherheitsschalter, der beispielsweise erst nach Einschlagen einer Schutzscheibe betätigbar ist, aktiviert werden kann.

Der Wechsel in den Notfall-Sicherheitsmodus kann auf unterschiedliche Weise erfolgen. Wichtig ist dabei, dass die spezielle Bedeutung klar ist und so eine Aktivierung aus Bequemlichkeit im regulären operativen Betrieb unterbleibt.

Eine erste Variante die sicherstellt, dass eine Aktivierung des Notfall-Sicherheitsmodus aus Bequemlichkeit im regulären operativen Betrieb unterbleibt, kann beispielsweise anhand einer speziellen Schaltfläche auf einer graphischen Bedienoberfläche erreicht werden, durch deren Betätigung ein manueller Wechsel in den Notfall-Sicherheitsmodus erfolgt. Dabei kann der manuelle Wechsel in den Notfall-Sicherheitsmodus für alle Mitarbeiter zugänglich sein, oder nur für bestimmte authentisierte Mitarbeiter, beispielsweise nur für den oder die Vorarbeiter.

Eine zweite Variante die sicherstellt, dass eine Aktivierung des Notfall-Sicherheitsmodus aus Bequemlichkeit im regulären operativen Betrieb unterbleibt, ist eine Verwendung eines physikalischen Sicherheitsschalters zur Aktivierung des Notfall-Sicherheitsmodus. Bei einem solchen physikalischen Sicherheitsschalter kann es sich beispielsweise um einen Schlüsselschalter handeln, oder um einen Taster mit Einschlagscheibe, wie er beispielsweise von Feuermeldern bekannt ist, oder um zwei räumlich entfernte Schalter, welche von mindestens zwei Personen vorzugsweise gleichzeitig betätigt werden müssen. Bei letzterem können beide Schalter an der Automatisierungsanlage angebracht sein, aber in einem solchen Abstand, dass sie nicht von einer Person alleine gleichzeitig betätigt werden können. Die beiden Schalter können auch derart räumlich voneinander getrennt angeordnet sein, dass ein Schalter beispielsweise an der Automatisierungsanlage selbst angebracht ist und der zweite Schalter in einer entfernten Sicherheitszentrale. Die beschriebenen physikalischen Sicherheitsschalter können mit einem echten Feuer- oder Alarmknopf gekoppelt sein, wodurch bei einer Betätigung zusätzlich eine Alarmierung erfolgt, beispielsweise einer Werksfeuerwehr.

Eine dritte Variante die sicherstellt, dass eine Aktivierung des Notfall-Sicherheitsmodus aus Bequemlichkeit im regulären operativen Betrieb unterbleibt, sieht eine spezielle Log-In Prozedur vor, beispielsweise eine Eingabe eines speziellen Notfall-Passworts oder eine Nutzung eines speziellen Notfall-Authentisierungstokens, wie etwa eine Notfall-Chipkarte.

Eine vierte Variante die sicherstellt, dass eine Aktivierung des Notfall-Sicherheitsmodus aus Bequemlichkeit im regulären operativen Betrieb unterbleibt, ist automatisch abhängig vom Betriebszustand der Automatisierungsanlage. Hierzu werden bestimmte Parameter der Automatisierungsanlage überwacht und beispielsweise durch Vergleich mit vorgegebenen Grenzwerten für diese Parameter automatisch entschieden, ob ein normaler Betriebszustand, oder ein Notfall vorliegt. In Verfahrenstechnischen Automatisierungsanlagen können beispielsweise Druck und Temperatur durch geeignete, vorzugsweise redundant angeordnete Sensoren gemessen werden, wobei durch Vergleich mit festgelegten Grenzwerten, wie etwa einer maximal zulässigen Höchsttemperatur, einem maximal zulässigen Höchstdruck, einer Mindesttemperatur, einem Mindestdruck automatisch überwacht und festgestellt werden kann, ob die Messwerte für Druck und Temperatur in der Automatisierungsanlage bei der Durchführung eines bestimmten Verfahrensprozesses innerhalb einem bestimmten, zulässigen Betriebsbereich liegen, also ein normaler Betriebszustand vorliegt, oder nicht, also ein Notfall vorliegt.

Der Notfall-Sicherheitsmodus bleibt nach der Aktivierung entweder dauerhaft bestehen, bis er manuell wieder deaktiviert wird, beispielsweise durch Betätigen eines Schalters oder dergleichen, oder er wird nach einer bestimmten vorgegebenen Zeitspanne automatisch wieder deaktiviert. Der Notfall-Sicherheitsmodus kann auch nach Abwenden eines Notfalls automatisch deaktiviert werden, beispielsweise wenn die von Sensoren erfassten Messwerte wieder innerhalb des zulässigen Betriebsbereichs liegen. Als weitere Möglichkeit ist denkbar, dass der Notfall-Sicherheitsmodus nur so lange aktiviert bleibt, wie ein entsprechender Aktivierungsschalter oder dergleichen betätigt bzw. betätigt gehalten wird.

## Patentansprüche

1. Verfahren zur Zugriffskontrolle auf eine Automatisierungsanlage (01), wobei
durch die Zugriffskontrolle vorgegebene Zugriffsrechte vom Betriebszustand der Automatisierungsanlage (01) abhängen, **dadurch gekennzeichnet, dass** zumindest in einem Notfall unabhängig von den Zugriffsrechten im Normalbetrieb erweiterte Zugriffsrechte gewährt werden.

2. Verfahren nach Anspruch 1,
**dadurch gekennzeichnet,**
**dass** zur Erfassung des Betriebszustands die Automatisierungsanlage (01) überwacht wird.

3. Verfahren nach Anspruch 2,
**dadurch gekennzeichnet,**
**dass** die Überwachung mittels geeigneter Sensoren (06) automatisch erfolgt.

4. Verfahren nach Anspruch 2,
**dadurch gekennzeichnet,**
**dass** die Überwachung durch ein Bedien- und Wartungspersonal (12) erfolgt.

5. Verfahren nach einem der vorhergehenden Ansprüche,
**dadurch gekennzeichnet,**
**dass** ein Notfall automatisch ausgelöst wird, sobald bestimmte Prozessgrößen der Automatisierungsanlage (01) vorgegebene Grenzwerte überschreiten.

6. Verfahren nach einem der Ansprüche 1 bis 4,
**dadurch gekennzeichnet,**
**dass** ein Notfall manuell ausgelöst wird.

7. Verfahren nach einem der vorhergehenden Ansprüche,
**dadurch gekennzeichnet,**
**dass** die Zugriffsrechte im Normalbetrieb eng festgelegt sind, um Fehlbedienungen und unauthorisierte Zugriffe zu vermieden.

8. Verfahren nach einem der vorhergehenden Ansprüche,
**dadurch gekennzeichnet,**
**dass** die Zugriffsrechte im Normalbetrieb rollenbasiert festgelegt sind.

9. Verfahren nach einem der vorhergehenden Ansprüche,
**dadurch gekennzeichnet,**
**dass** im Normalbetrieb zur Erlangung von Zugriffsrechten und/oder zur Erlangung zusätzlicher und/oder anderer Zugriffsrechte eine Identifikation des Zugreifenden bzw. eine Authentisierung durchgeführt wird.

10. Verfahren nach einem der vorhergehenden Ansprüche,
**dadurch gekennzeichnet,**
**dass** bei Auftreten eines Notfalls ein Alarm ausgelöst wird zur automatischen Alarmierung und Aktivierung von Notfallmaßnahmen.

11. Verfahren nach einem der vorhergehenden Ansprüche,
**dadurch gekennzeichnet,**
**dass** zumindest in einem Notfall die von einem Bedien- und Wartungspersonal (12) vorgenommenen Aktionen und Zugriffe aufgezeichnet und/oder protokolliert werden.

12. Verfahren nach einem der vorhergehenden Ansprüche,
**dadurch gekennzeichnet,**
**dass** zumindest in einem Notfall ein spezieller Notfall-Sicherheitsmodus vorgesehen ist, bei dem die für den Normalbetrieb vorgesehene harte Kontrolle und Vergabe von Zugriffsrechten durch weichere Maßnahmen ersetzt wird, die nachträglich auswertbar sind bzw. ausgewertet werden.

13. Verfahren nach Anspruch 12,
**dadurch gekennzeichnet,**
**dass** die weicheren Maßnahmen ein Gewähren erweiterter Zugriffsrechte und/oder ein Deaktivieren der Kontrolle und Vergabe von Zugriffsrechten umfassen, wodurch alle Handlungen und Zugriffe erlaubt werden.

14. Verfahren nach Anspruch 12,
**dadurch gekennzeichnet,**
**dass** die weicheren Maßnahmen einen Verzicht auf eine Authentisierung umfassen, wodurch Jedermann eine die Automatisierungsanlage (01) steuernde Bedien- und Überwachungseinrichtung (08) nutzen kann.

15. Verfahren nach Anspruch 12, 13 oder 14,
**dadurch gekennzeichnet,**
**dass** zur nachträglichen Auswertung der weicheren Maßnahmen ein Aufzeichnen und Protokollieren der vorgenommenen Zugriffe erfolgt.

16. Verfahren nach einem der Ansprüche 12 bis 15,
**dadurch gekennzeichnet,**
**dass** zur nachträglichen Auswertung der weicheren Maßnahmen eine Aktivierung einer Video-Überwachung (10) bzw. Aktivieren einer Video-Aufzeichnung erfolgt.

17. Verfahren nach einem der Ansprüche 12 bis 16,
**dadurch gekennzeichnet,**
**dass** der Notfall-Sicherheitsmodus mehrere Unterstufen mit unterschiedlichen Zugriffsrechten umfasst, welche schrittweise aktivierbar sind bzw. aktiviert werden.

18. Verfahren nach einem der Ansprüche 12 bis 17,
**dadurch gekennzeichnet,**
**dass** eine Aktivierung des Notfall-Sicherheitsmodus manuell erfolgt.

19. Verfahren nach Anspruch 18,
**dadurch gekennzeichnet,**
**dass** eine Aktivierung des Notfall-Sicherheitsmodus durch eine Betätigung einer speziellen Schaltfläche auf einer graphischen Bedienoberfläche erfolgt.

20. Verfahren nach Anspruch 18,
**dadurch gekennzeichnet,**
**dass** eine Aktivierung des Notfall-Sicherheitsmodus durch eine Betätigung eines physikalischen Sicherheitsschalters (09) erfolgt.

21. Verfahren nach Anspruch 20,
**dadurch gekennzeichnet,**
**dass** der physikalische Schalter (09) mit einem Feuer- oder Alarmknopf gekoppelt ist.

22. Verfahren nach Anspruch 18,
**dadurch gekennzeichnet,**
**dass** eine Aktivierung des Notfall-Sicherheitsmodus durch eine spezielle Log-In Prozedur erfolgt.

23. Verfahren nach einem der Ansprüche 12 bis 17,
**dadurch gekennzeichnet,**
**dass** eine Aktivierung des Notfall-Sicherheitsmodus automatisch abhängig vom Betriebszustand der Automatisierungsanlage (01) erfolgt.

24. Verfahren nach einem der Ansprüche 12 bis 23,
**dadurch gekennzeichnet,**
**dass** der Notfall-Sicherheitsmodus nach der Aktivierung bestehen bleibt, bis er manuell wieder deaktiviert wird.

25. Verfahren nach einem der Ansprüche 12 bis 23,
**dadurch gekennzeichnet,**
**dass** der Notfall-Sicherheitsmodus nach der Aktivierung nach einer bestimmten vorgegebenen Zeitspanne automatisch wieder deaktiviert wird.

26. Verfahren nach einem der Ansprüche 12 bis 23,
**dadurch gekennzeichnet,**
**dass** der Notfall-Sicherheitsmodus nach der Aktivierung nach Abwenden eines Notfalls automatisch deaktiviert wird.

27. Verfahren nach einem der Ansprüche 12 bis 23,
**dadurch gekennzeichnet,**
**dass** der Notfall-Sicherheitsmodus nur so lange aktiviert bleibt, wie ein entsprechender Aktivierungsschalter (09) betätigt wird.

## Claims

1. Method for access control to an automation plant (01), wherein,
access rights predetermined by the access control are dependent on the operating state of the automation plant (01),
**characterised in that** at least during an emergency extended access rights are granted independently of the access rights in normal operation.

2. Method according to claim 1,
**characterised in that**,
in order to detect the operating state, the automation plant (01) is monitored.

3. Method according to claim 2,
**characterised in that**,
monitoring takes place automatically by means of suitable sensors (06).

4. Method according to claim 2,
**characterised in that**,
monitoring is carried out by operating and maintenance personnel (12).

5. Method according to one of the preceding claims,
**characterised in that**,
an emergency is automatically triggered as soon as specific process variables of the automation plant (01) exceed predetermined limit values.

6. Method according to one of claims 1 to 4,
**characterised in that**,
an emergency is triggered manually.

7. Method according to one of the preceding claims,
**characterised in that**,
the access rights in normal operation are tightly specified in order to prevent incorrect operation and unauthorised access.

8. Method according to one of the preceding claims,
**characterised in that**,
in normal operation the access rights are specified in a role-based manner.

9. Method according to one of the preceding claims,
**characterised in that**,
in normal operation, in order to obtain access rights and/or to obtain additional and/or other access rights, identification of the accessing party or authentication is carried out.

10. Method according to one of the preceding claims,
**characterised in that**,
when an emergency occurs an alarm is triggered for automatic signalling and activation of emergency measures.

11. Method according to one of the preceding claims,
**characterised in that**,
at least in an emergency the actions taken and access effected by operating and maintenance personnel (12) are recorded and/or logged.

12. Method according to one of the preceding claims,
**characterised in that**,
at least in an emergency a special emergency safety mode is provided in which the tight control and allocation of access rights provided for normal operation is replaced by softer measures which can be or are evaluated later.

13. Method according to claim 12,
**characterised in that**,
the softer measures include the granting of extended access rights and/or deactivation of the control and allocation of access rights, which permits all operations and access attempts.

14. Method according to claim 12,
**characterised in that**,
the softer measures include dispensing with an authentication, whereby anyone can use an operating and monitoring unit (08) that is controlling the automation plant (01).

15. Method according to claim 12, 13 or 14,
**characterised in that**,
recording and logging of the access attempts is implemented for later evaluation of the softer measures.

16. Method according to one of claims 12 to 15,
**characterised in that**,
video monitoring (10) or video recording is activated for later evaluation of the softer measures.

17. Method according to one of claims 12 to 16,
**characterised in that**,
the emergency safety mode includes a plurality of sublevels with different access rights, which can be or are incrementally activated.

18. Method according to one of claims 12 to 17,
**characterised in that**,
activation of the emergency safety mode is effected manually.

19. Method according to claim 18,
**characterised in that**,
activation of the emergency safety mode is implemented by actuation of a special switch surface on a graphical operator interface.

20. Method according to claim 18,
**characterised in that**,
activation of the emergency safety mode is implemented by actuation of a physical safety switch (09).

21. Method according to claim 20,
**characterised in that**,
the physical switch (09) is coupled to a fire or alarm button.

22. Method according to claim 18,
**characterised in that**,
activation of the emergency safety mode is implemented by a special log-in procedure.

23. Method according to one of claims 12 to 17,
**characterised in that**,
activation of the emergency safety mode is automatically implemented dependent on the operating state of the automation plant (01).

24. Method according to one of claims 12 to 23,
**characterised in that**,
after activation the emergency safety mode remains in force until it is manually deactivated again.

25. Method according to one of claims 12 to 23,
**characterised in that**,
after activation the emergency safety mode is automatically deactivated again on expiration of a certain predetermined time interval.

26. Method according to one of claims 12 to 23,
**characterised in that**,
after activation the emergency safety mode is automatically deactivated after an emergency has been averted.

27. Method according to one of claims 12 to 23,
**characterised in that**,
the emergency safety mode remains activated only for as long as a corresponding activation switch (09) is actuated.

## Revendications

1. Procédé de contrôle de l'accès à une installation d'automatisation (01),
des droits d'accès prédéfinis par le contrôle de l'accès dépendant de l'état de fonctionnement de l'installation d'automatisation (01),
**caractérisé en ce que** des droits d'accès étendus sont concédés, au moins en cas d'urgence, indépendamment des droits d'accès pendant le fonctionnement normal.

2. Procédé selon la revendication 1, **caractérisé en ce que** l'installation d'automatisation (01) est surveillée afin de détecter l'état de fonctionnement.

3. Procédé selon la revendication 2, **caractérisé en ce que** la surveillance s'effectue automatiquement au moyen de capteurs appropriés (06).

4. Procédé selon la revendication 2, **caractérisé en ce que** la surveillance est réalisée par un personnel de service et de maintenance (12).

5. Procédé selon l'une des revendications précédentes, **caractérisé en ce qu'**une urgence est déclenchée automatiquement dès que certaines grandeurs de processus de l'installation d'automatisation (01) dépassent des limites prédéfinies.

6. Procédé selon l'une des revendications 1 à 4, **caractérisé en ce qu'**une urgence est déclenchée manuellement.

7. Procédé selon l'une des revendications précédentes, **caractérisé en ce que** les droits d'accès pendant le fonctionnement normal sont strictement définis afin d'éviter des fausses manoeuvres et des accès non autorisés.

8. Procédé selon l'une des revendications précédentes, **caractérisé en ce que** les droits d'accès pendant le fonctionnement normal sont définis sur la base de rôles.

9. Procédé selon l'une des revendications précédentes, **caractérisé en ce que**, pendant le fonctionnement normal, une identification de l'accédant resp. une authentification est exécutée pour l'obtention de droits d'accès et/ou pour l'obtention de droits d'accès supplémentaire et/ou d'autres droits d'accès.

10. Procédé selon l'une des revendications précédentes, **caractérisé en ce qu'**une alarme est déclenchée en cas de survenue d'une urgence pour lancer automatiquement une alerte et l'activation de mesures d'urgence.

11. Procédé selon l'une des revendications précédentes, **caractérisé en ce que** les actions entreprises et les accès réalisés par un personnel de service et de maintenance (12) sont, au moins en cas d'urgence, enregistrés et/ou consignés dans un procès-verbal.

12. Procédé selon l'une des revendications précédentes, **caractérisé en ce que** l'on prévoit, au moins en cas d'urgence, un mode spécial de sécurité d'urgence dans le cadre duquel le contrôle strict et l'attribution stricte de droits d'accès qui sont prévus pour le fonctionnement normal sont remplacés par des mesures plus souples qui peuvent faire resp. font l'objet d'une évaluation ultérieure.

13. Procédé selon la revendication 12, **caractérisé en ce que** les mesures plus souples comprennent une concession de droits d'accès étendus et/ou une désactivation du contrôle et de l'attribution de droits d'accès, grâce à quoi toutes les opérations et tous les accès sont autorisés.

14. Procédé selon la revendication 12, **caractérisé en ce que** les mesures plus souples comprennent un renoncement à une authentification, grâce à quoi tout le monde peut se servir d'un dispositif de commande et de surveillance (08) qui commande l'installation d'automatisation (01).

15. Procédé selon la revendication 12, 13 ou 14, **caractérisé en ce que** les accès réalisés sont enregistrés et consignés dans un procès-verbal en vue de l'évaluation ultérieure des mesures plus souples.

16. Procédé selon l'une des revendications 12 à 15, **caractérisé en ce qu'**il est procédé à une activation d'une vidéosurveillance (10) resp. activation d'un enregistrement vidéo en vue de l'évaluation ultérieure des mesures plus souples.

17. Procédé selon l'une des revendications 12 à 16, **caractérisé en ce que** le mode de sécurité d'urgence est subdivisé en plusieurs niveaux avec des droits d'accès différents qui peuvent être resp. sont activés de manière graduelle.

18. Procédé selon l'une des revendications 12 à 17, **caractérisé en ce qu'**une activation du mode de sécurité d'urgence s'effectue manuellement.

19. Procédé selon la revendication 18, **caractérisé en ce qu'**une activation du mode de sécurité d'urgence s'effectue en actionnant un bouton spécial sur une surface graphique d'utilisateur.

20. Procédé selon la revendication 18, **caractérisé en ce qu'**une activation du mode de sécurité d'urgence s'effectue en actionnant un interrupteur de sécurité physique (09).

21. Procédé selon la revendication 20, **caractérisé en ce que** l'interrupteur physique (09) est couplé à un bouton d'incendie ou d'alarme.

22. Procédé selon la revendication 18, **caractérisé en ce qu'**une activation du mode de sécurité d'urgence s'effectue grâce à une procédure d'ouverture de session spéciale.

23. Procédé selon l'une des revendications 12 à 17, **caractérisé en ce qu'**une activation du mode de sécurité d'urgence s'effectue automatiquement en fonction de l'état de fonctionnement de l'installation d'automatisation (01).

24. Procédé selon l'une des revendications 12 à 23, **caractérisé en ce que** le mode de sécurité d'urgence subsiste après l'activation jusqu'à ce qu'il soit à nouveau désactivé manuellement.

25. Procédé selon l'une des revendications 12 à 23, **caractérisé en ce que** le mode de sécurité d'urgence est à nouveau désactivé de manière automatique après un certain laps de temps prédéfini après l'activation.

26. Procédé selon l'une des revendications 12 à 23, **caractérisé en ce que** le mode de sécurité d'urgence est automatiquement désactivé après l'activation une fois l'urgence écartée.

27. Procédé selon l'une des revendications 12 à 23, **caractérisé en ce que** le mode de sécurité d'urgence ne reste activé qu'aussi longtemps qu'un interrupteur d'activation correspondant (09) est actionné.
